# EUROPEAN PATENT APPLICATION

(11) **EP 4 286 043 A1**
(43) Date of publication of application: **06.12.2023**
(21) Application number: 23176148.7
(22) Date of filing: 30.05.2023
(51) Int. Cl.: B01J 19/00, B01J 19/24, F28D 9/00, B01J 8/02, F28F 3/14, F28F 9/02

(54) **CATALYTIC REACTOR WITH HEAT EXCHANGE UNIT**

(30) Priority: 31.05.2022 EP 22465536
(71) Applicant: Walter Tosto S.p.A., 66100 Chieti Scalo (CH) (IT)
(72) Inventor: TOSTO, Luca, 66100 CHIETI SCALO (CH) (IT); POPA, Dorin, 66100 CHIETI SCALO (CH) (IT)
(74) Representative: Santi, Filippo

(57) **Abstract**

The invention concerns a catalytic reactor (10, 10') comprising a cylindrical shell (13), having a process fluid inlet opening (14) and a process fluid outlet opening (15), a heat exchange unit (Hex unit) (11) inside said cylindrical shell (13), said Hex unit (11) comprising a plurality of heat exchange elements (Hex elements) (12, 12'), each Hex element (12, 12') being arranged vertical in a circular pattern and forms a heat exchanging cylinder (Hex cylinder) with a radial distance between each Hex cylinder.

## Description

The present invention concerns a catalytic reactor with heat exchange unit (Hex unit).

More precisely, the invention concerns a catalytic reactor, wherein heat exchange elements (Hex elements) are used for regulating the temperature of a process fluid in the catalytic reactor and/or of a catalyst bed in a catalytic reactor. The curved Hex element is made of two curved plates periferical connected together by welding at a defined distance between them in such a way that between the two plates, a sealed compartment is created. In case that the Hex element has openings for the gas passage, the opening itself is pheriferically sealed by welding to keep the compartment sealed. In that created compartment a cooling or heating fluid flow is meant to keep the catalyst/process temperature at optimal range.

The heating/cooling elements (Hex elements) are arranged vertical in a circular pattern and forms a heat exchanging cylinder (Hex cylinder). The arrangement in a plurality of Hex cylinders concentric with the reactor vertical axis forms a Hex Unit.

As it is known, in order to reach the maximum yield of a reaction, operating conditions inside the reactor must be controlled to maintain the reaction as close as possible to optimal values. In particular, an ideal catalytic reactor is a reactor where the reaction takes place in the catalyst bed at optimal operating conditions to reach the maximum conversion rate.

According to the prior art, catalytic reactors with heat exchange elements are used in exothermic or endothermic reactions (for example ammonia and methanol synthesis) where the temperature needs to be controlled. In order to obtain the optimum process conditions in a catalytic reactor, the heat exchange and any other means of regulating the temperature must be configured to make the reaction curve (i.e. the curve representing the conversion rate as a function of the temperature) follow the maximum curve, i.e. the curve closer to the ideal equilibrium curve, to obtain the highest reaction yield.

According to the prior art, said heat exchangers can be made of a plurality of box-shaped parallelepiped bodies, called plates, made of two walls connected to each other at least along the perimeter to define an internal chamber for the passage of a heat exchange fluid. EP1532414 discloses a heat exchange unit having a flattened configuration and being grouped in a cylindrical arrangement coaxial to the shell, where plate exchangers are arranged according to a radial configuration. EP1952083 discloses a method for the production of plate-type heat exchangers with two tubular passages at the end of the plate.

The catalytic reactors with heat exchange elements according to the prior art present recognized drawbacks such as these heat exchange elements being arranged in a radial position and with a lack of constant distance between heat exchange cylinders on the reactor radius, which implies an irregular catalyst thickness.

In addition, in the catalytic reactors with heat exchange elements according to the prior art it is not possible to regulate the gap between these elements. In fact, due to radial arrangement of the heat exchange elements there is a maximum number of heat exchange elements that can be placed inside the reactor, due to their proximity in the most inner zone of the reactor, and consequent interference with each other. The gap (i.e. the space that can be occupied by the catalyst and can be defined as the catalyst thickness) will be always larger at the more external zone of the reactor and narrower at the more internal zone. This reduces the flexibility to control the process heat exchange.

As a consequence, in radial flow reactors according to the prior art the thermal exchange is higher in the zone close to the centre of the reactor and lower in the zone far from the centre of the reactor.

In view of all above, the need for a novel/innovative chemical reactor with Hex elements that form a Hex cylinder with a constant distance between two subsequent Hex cylinders with the possibility of regulating the heat exchange within the reactor and in particular the catalyst bed temperature, according to the reaction and heat exchange fluid flow rates.

Therefore, in the present invention, it is proposed a catalytic reactor with a plurality of Hex elements that are arranged vertical in a circular pattern to form a heat exchanging cylinder (Hex cylinder), with a constant or variable radial distance between Hex cylinders, the radial distance allowing an interspace between two subsequent Hex cylinders.

In particular, according to the present invention, said interspace is crossed by a process fluid, whereas a heat exchange fluid is flowing inside the Hex elements. A catalyst bed can be located inside said interspace. Said Hex elements are sealed in such a way that there is no contact between the fluid flowing through the catalyst bed and the heat exchange fluid flowing inside the Hex elements.

In particular, the radial distance between two subsequent Hex cylinders can be increased or decreased with the advantage to regulate the catalyst thickness, hence the catalyst bed temperature according to the reaction and heat exchange fluid flow rates. The gap between the Hex cylinders is a design parameter calculated according to the reaction rate.

Always according to the invention, the sensitive parameters to control the reaction temperature in the optimal range are the size and number of Hex cylinders along which are arranged by the Hex elements, the interspace between Hex cylinders, and the flow rate of the heat exchange fluid inside the Hex elements.

In particular, according to the invention, the interspace and the number of Hex cylinders along which are arranged by the Hex elements can be defined during engineering/design phase according to the heat transfer required by the process. In fact, if the reaction rate is higher at the inlet of the process fluid in the catalyst bed and lower at the outlet, the gap is narrower at the inlet of the catalyst bed and is increasing towards the outlet. Instead, if the reaction rate is higher at the outlet of the process fluid in the catalyst bed the gap is wider at the inlet and is getting narrower towards the outlet of the catalyst bed. Finally, if the reaction rate is constant in the catalyst bed, also the gap is constant.

In addition, said Hex elements can be provided with a plurality of openings. The number and the cross section of the openings are calculated according to the process flow and the flow rate needed for the optimal reaction rate.

It is therefore an aim of the present invention a catalytic reactor with Hex unit, wherein Hex elements are arranged vertical in a circular pattern to form a Hex cylinder, with a constant or variable radial distance between Hex cylinders, the radial distance allowing an interspace between two subsequent Hex cylinders overcoming the limits of the solutions according to the prior art and achieving the previously described technical results.

According to one embodiment, the catalytic reactor of the present invention is used by filling the interspace between the two subsequent Hex cylinders with a catalyst. The catalyst loading and unloading is easy and efficient to perform.

Further, according to another embodiment, the catalytic reactor according to the present invention is used as a gas - gas reactor, wherein the heat exchange fluid is a cold process gas entering the reactor and flowing through the Hex elements, before passing through the catalyst bed. In this way the catalytic reactor gives a unique ability to be sustainable by being able to generate the heat for the reaction and at the same time to control the catalyst bed temperature.

A further aim of the invention is that said catalytic reactor can be realised with substantially limited costs, as far as both the construction and the operative costs are concerned.

Another objective of the invention is realising a catalytic reactor being substantially simple, safe and reliable.

It is therefore a specific object of the present invention a catalytic reactor comprising a cylindrical shell, having a process fluid inlet opening and a process fluid outlet opening, a Hex unit inside said cylindrical shell, said Hex unit comprising a plurality of Hex elements, characterised in that the Hex elements are arranged vertical in a circular pattern to form a Hex cylinder, with a constant or variable radial distance between Hex cylinders, the radial distance allowing an interspace between two subsequent Hex cylinders.

Further, according to the invention each Hex element is a hollow element comprising two curved and concentric plates, with a defined distance between each other and connected together by welding along their respective perimeters to define an inner sealed compartment configured to be crossed by a heat exchange fluid, entering the compartment from a heat exchange fluid's inlet and exiting the the compartment from a heat exchange fluid's outlet.

Still according to the invention each Hex element can be provided with a plurality of openings, the plates forming the Hex element being welded along the contour of said openings.

Further, according to the invention each Hex element can be provided with a plurality of punching areas, wherein the plates are contacted, said openings being made across at least some of said punching area.

Preferably, according to the invention said process fluid inside said catalytic reactor can be alternatively direct radial, radial deflected or axial.

Further, according to the invention, the Hex cylinders along which are obtained by said Hex elements can be arranged with a constant or variable radial distance between each other.

Still according to the invention said Hex cylinders are arranged in a plurality of Hex cylinders concentric with the reactor vertical axis forms a Hex Unit.

Further, according to the invention said Hex elements can have an inlet directly connected with said process fluid inlet opening and an outlet directly connected to said interspaces of said Hex unit, said interspaces being connected to said process fluid outlet opening.

The invention will be disclosed herein below for illustrative, but non limitative purposes, according to a preferred embodiment, with reference in particular to the figures of the enclosed drawing, wherein:
- figure 1 shows a schematic longitudinal section view of a catalytic reactor wherein there are a plurality of Hex elements arranged along a cylindrical pattern concentric with the reactor vertical central axis according to a first embodiment of the present invention,
- figure 2A shows a portion of a Hex element with the openings according to an embodiment of the present invention,
- figure 2B shows a portion of a Hex element according to another embodiment of the present invention,
- figure 2C shows a schematic representation of a Hex element according to still another embodiment of the invention,
- figure 2D shows a top view of a curved Hex element according to another embodiment of the invention,
- figure 3A shows a cross section view of the catalytic reactor of figure 1, with Hex elements with openings of figure 2D according to the present invention,
- figure 3B shows a cross section view of the catalytic reactor of figure 1, with Hex elements of figure 2B according to the present invention,
- figure 4 shows a schematic longitudinal section view of a gas - gas reactor, according to another embodiment of the invention,
- figure 5 shows a schematic longitudinal section of an axial reactor, according to still another embodiment of the invention.

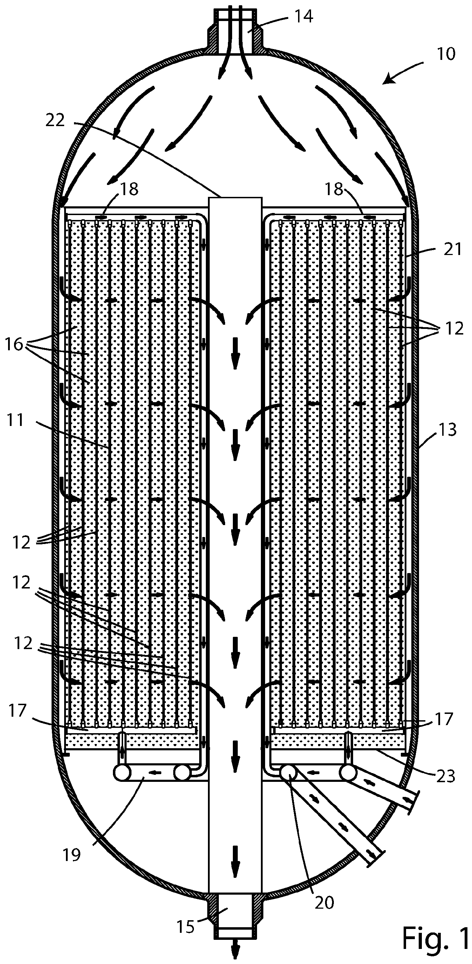

With reference to figure 1 a chemical reactor is shown, globally identified by the numeral 10, comprising a Hex unit 11, comprising a plurality of Hex cylinders 12 arranged in a plurality of Hex cylinders concentric with the reactor vertical axis forms a Hex Unit according to a first embodiment of the present invention.

More precisely, the catalytic reactor 10 comprises a cylindrical shell 13 having an upper inlet opening 14 and a lower outlet opening 15. In the reactor 10, the reaction takes place in the catalyst located in the interspace 16 between a plurality of Hex cylinders 12 arranged in a plurality of Hex cylinders concentric with the reactor vertical axis, at optimal operating conditions to reach the maximum conversion rate. Loading of the catalyst can be easily performed by dropping the catalyst from above the heat exchange unit 11.

The Hex cylinders 12 have an inlet 17 and an outlet 18 for the heat exchange fluid, which are respectively connected to inlet headers 19 and outlet headers 20, which in turn are connected to the outside lines that deliver or collect the heat exchange fluid.

The process fluid enters the reactor 10 through the upper inlet opening 14 and exits therefrom through the lower outlet opening 15, after being passed through the catalyst bed in the interspace 16.

According to different embodiments of the invention, the flow of the process fluid in the catalyst bed can be radial, axial or a combination of both. Figure 1 shows the process fluid from the upper inlet opening 14 flowing in the space between the perforated wall exterior collector 21 and cylindrical shell 13, then radially from the perforated wall exterior collector 21 through the catalyst and the openings of the Hex cylinder 12 to a perforated interior collector 22, and subsequently to the lower outlet opening 15.

The catalyst bed is supported by a layer of a bulk of inert spherical material. The inert spherical material can be loaded/unloaded in the same way as the catalyst.

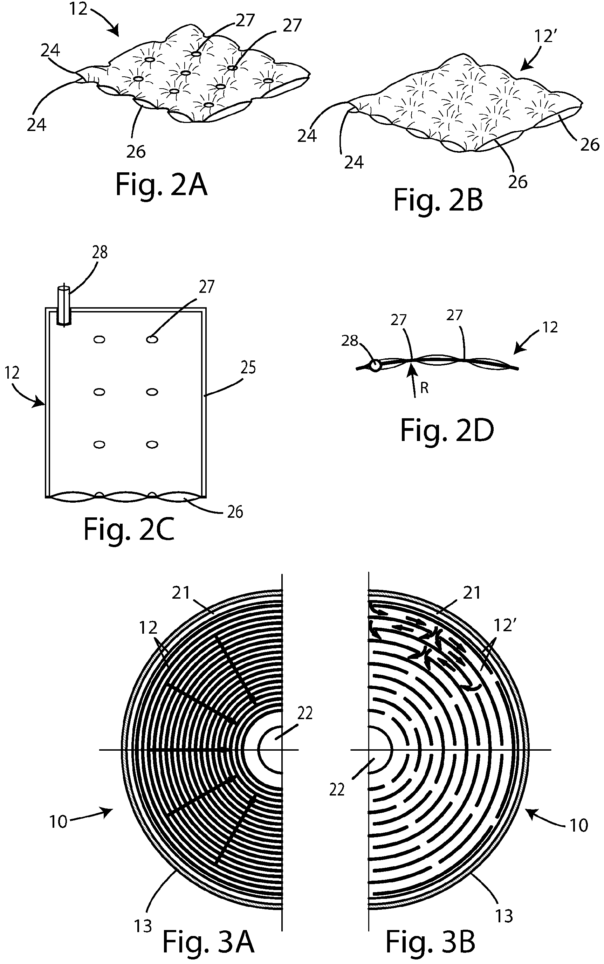

More specifically (figures 2A, 2B, 2C, 2D), each heat exchange element 12 consists of a pair of juxtaposed metallic plates 24, welded along their perimeters 25 to define an inner compartment 26.

As shown in figure 2a, according to an embodiment of the proposed invention, a Hex element 12 has a plurality of openings 27 where the process fluid flows through the Hex element 12, which is positioned perpendicular to the process fluid flow. Said openings 27 can be obtained by perforating the Hex element 12 in correspondence of a plurality of punching areas and by welding the metal plates 24 in correspondence of the contours of said punching areas.

As a consequence, a Hex element 12 with a plurality of punching areas has a structure allowing to realise and vary the number of openings 27 without changing the space and the path available to the heat exchange fluid inside the Hex element 12, facilitating the production process of the Hex element 12 and facilitating the interchangeability of the Hex element 12 within the reactor 10.

In accordance with the present invention, as shown in figure 2C, said Hex elements 12 are also equipped with an inlet/outlet connector 28 for a heat exchange fluid.

The process fluid flow inside the reactor 10 can be direct radial or radial deflected, depending if Hex elements 12 provided with openings or solid Hex elements 12' are used. In case of direct radial flow, the heat exchange fluid flows radially in the catalyst bed, through the openings of the Hex element 12 as shown in figure 3A. For deflected radial flow the Hex elements 12' have no openings and are arranged cylindrically with an annular gap between the Hex elements 12', staggered on the radius. The process fluid flows radially through the annular gap created by the Hex elements 12' of two adjacent cylindrical patterns and is deflected circular up to the subsequent annular gap as showed in figure 3B.

It is evident from the above description how the present invention allows the possibility to regulate the catalyst bed temperature according to the reaction and heat exchange fluid flow rates, by varying the radial distance between two subsequent Hex cylinders, hence regulating the catalyst thickness.

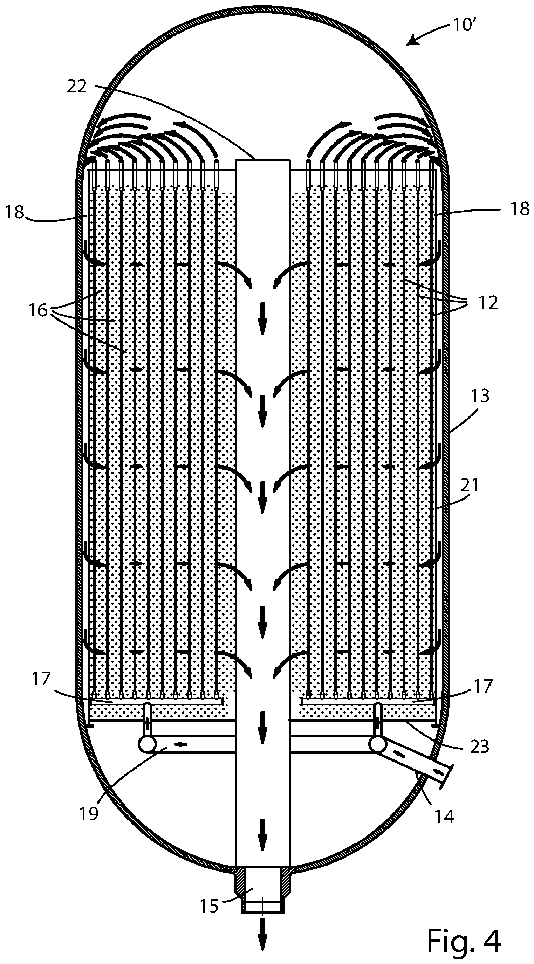

With reference to figure 4, a further embodiment according to the invention is shown. In particular, figure 4 shows a gas - gas reactor 10' in which both the heat exchange fluid and the process fluid are the same process gas. In particular, the process gas from the process gas inlet opening 14 passes first inside the heat exchange elements 12, and subsequently flows through the catalysts, before exiting the reactor through the process fluid outlet opening 15. This way, the process gas reacting outside the heat exchange elements 12 exchanges the excess heat with the cold process gas inside the heat exchange elements 12, thus exchanging heat to bring the process gas to the reaction temperature before entering to the catalyst, which can be considered an efficient use of process heat in a single unit. According to this embodiment, the outlet 18 of the heat exchange elements 12 is naturally directed in the annular gap between the perforated wall exterior collector 21 and reactor cylindrical shell 13.

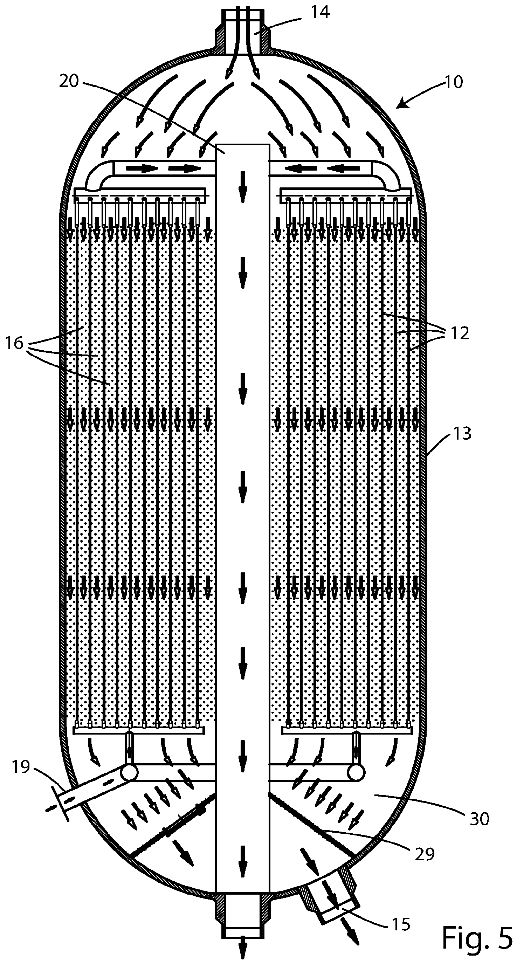

With reference to figure 5, a further embodiment according to the invention is shown. The catalytic reactor 10 comprises a cylindrical shell 13 having an upper inlet opening 14 and a lower outlet opening 15 and includes a plurality of Hex elements 12 according to a further embodiment of the present invention. According to this embodiment, the process gas passes axially through the catalyst.

More precisely, the process gas enters the reactor through the upper inlet opening 14 and exits through the lower outlet opening 15. In the catalytic reactor 10, the reaction takes place in a catalyst bed in the interspace 16 between a plurality of Hex elements 12, at optimal operating conditions to reach the maximum conversion rate.

The heat exchange elements 12 have an inlet and an outlet for the heat exchange fluid, which are respectively connected to inlet headers 19 and outlet headers 20, which in turn are connected to the outside lines that sends or collects the heat exchange fluid.

The catalyst is supported by a layer 30 of bulk inert spherical material. The inert spherical material is supported by a conical perforated cone 29 located in the lower part of the catalytic reactor 10 and separating the spherical inert material from the lower outlet opening 15. The process gas passes axially through the catalyst, then through the spherical inert material layer and exits through the conical perforated cone 29 and the lower outlet opening 15.

The present invention was disclosed for illustrative, non limitative purposes, according to a preferred embodiment thereof, but it has to be understood that any variations and/or modification can be made by the persons skilled in the art without for this reason escaping from the relative scope of protection, as defined in the enclosed claims.

## Claims

1. Catalytic reactor (10, 10') comprising a cylindrical shell (13), having a process fluid inlet opening (14) and a process fluid outlet opening (15), a heat exchange unit (Hex unit) (11) inside said cylindrical shell (13), said Hex unit (11) comprising a plurality of heat exchange elements (Hex elements) (12, 12'), **characterised in that** each Hex element (12, 12') being arranged vertical in a circular pattern and forms a heat exchanging cylinder (Hex cylinder), the catalytic reactor (10, 10') comprising a plurality of Hex cylinders concentric with the reactor vertical axis and formings a Hex Unit (11).

2. Catalytic reactor (10) according to claim 1, **characterised in that** each Hex element (12, 12') consisting of a pair of juxtaposed metallic plates (24), welded along their perimeters (25) to define an inner compartment (26) configured to be crossed by a heat exchange fluid, the compartment comprising a heat exchange fluid inlet and a heat exchange fluid outlet.

3. Catalytic reactor (10) according to claim 2, **characterised in that** each Hex element (12) is provided with a plurality of openings (27), the metallic plates (24) of the Hex element (12) being welded along the contour of said openings (27).

4. Catalytic reactor (10) according to claim 3, **characterised in that** each Hex element (12) is provided with a plurality of punching areas, wherein the metallic sheets (24) are in contact, said openings (27) being made across at least some of said punching area.

5. Catalytic reactor (10) according to any one of the preceding claims, **characterised in that** the path of said process fluid inside said heat exchange unit (11) is alternatively direct radial, radial deflected or axial.

6. Catalytic reactor (10) according to any one of the preceding claims, **characterised in that** the cyclindrical patterns along which said Hex elements (12, 12') are arranged vertical in a circular pattern and forms a Hex cylinder.

7. Catalytic reactor (10) according to any one of the preceding claims, **characterised in that** said Hex elements (12) form a cylindrical wall along the entire cylindrical pattern.

8. Catalytic reactor (10') according to any one of the preceding claims, **characterised in that** said Hex elements (12, 12') have an inlet (18) directly connected with said process fluid inlet opening (14) and an outlet (18) directly connected to said interspaces (16) of said heat exchange unit (11), said interspaces being connected to said process fluid outlet opening (15).
